# EUROPEAN PATENT APPLICATION

(11) **EP 4 287 730 A1**
(43) Date of publication of application: **06.12.2023**
(21) Application number: 21923159.4
(22) Date of filing: 08.12.2021
(51) Int. Cl.: H04W 72/02, H04W 92/18, H04W 52/02

(54) **TERMINAL AND COMMUNICATION METHOD**

(30) Priority: 28.01.2021 JP 2021012458
(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2021/045216
(87) International publication number: WO 2022/163154

(57) **Abstract**

A terminal includes a transmitter configured to perform resource selection in a resource pool; and a controller configured to determine an operation of DRX (Discontinuous Reception) based on an operation of the resource selection.

## Description

### [FIELD OF THE INVENTION]

The present invention relates to a terminal and a communication method in a wireless communication system.

### [BACKGROUND OF THE INVENTION]

In LTE (Long Term Evolution) and LTE successor systems (e.g., LTE-A (LTE Advanced), NR (New Radio) (also referred to as 5G)), a D2D (Device to Device) technology in which terminals communicate directly with each other without using a base station is being discussed (e.g., Non-Patent Document 1).

The D2D reduces traffic between the terminals and the base stations and enables communication between the terminals even when the base stations are unable to communicate during a disaster, etc. Although the 3GPP (3rd Generation Partnership Project) refers to D2D as a "sidelink", the more generic term D2D is used herein. However, in the description of embodiments described below, the sidelink is also used as needed.

The D2D communication is broadly classified into: D2D discovery for discovering other terminals capable of communication; and D2D communication (D2D direct communication, direct communication between terminals, etc.) for direct communication between terminals. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2).

### [Citation List]

### [Non-Patent Document]

[Non-Patent Document 1] 3GPP TS 38.211 V16.4.0 (2020-12)
[Non-Patent Document 2] 3GPP TR 22.886 V15.1.0 (2017-03)

### SUMMARY OF THE INVENTION

### [TECHNICAL PROBLEM]

Power saving has been discussed as an enhancement of the NR sidelink. For example, in the resource allocation mode 2, in which the terminal autonomously selects a resource, the terminal performs partial sensing to sense the limited resources in the sensing window and, based on the result, selects available resource candidates from the resource selection window.

In addition, the DRX (Discontinuous Reception) is supported as one of the power saving features in the sidelink. That is, the reception operation is performed only for a predetermined time interval.

On the other hand, with respect to the resource allocation operation used in resource allocation mode 2, there has been no technical specification regarding how to define the time interval during which no reception operation is to be performed, i.e., the DRX sleep period.

The present invention has been made in view of the above points, and is intended to adjust the Discontinuous Reception (DRX) operation to be in harmony with the operation at the time of autonomous resource selection in direct communication between terminals.

### [SOLUTION TO PROBLEM]

According to the disclosed technique, a terminal includes: a transmitter configured to perform resource selection in a resource pool; and a controller configured to determine an operation of DRX (Discontinuous Reception) based on an operation of the resource selection.

### [ADVANTAGEOUS EFFECTS OF INVENTION]

According to the disclosed technique, in direct communication between terminals, the DRX (Discontinuous Reception) operation is adjusted to fit the operation at the time of autonomous resource selection.

### BRIEF DESCRIPTION OF THE DRAWINGS

[Fig. 1] Fig. 1 is a drawing illustrating V2X.
[Fig. 2] Fig. 2 is a drawing illustrating an example (1) of a V2X transmission mode.
[Fig. 3] Fig. 3 is a drawing illustrating an example (2) of a V2X transmission mode.
[Fig. 4] Fig. 4 is a drawing illustrating an example (3) of a V2X transmission mode.
[Fig. 5] Fig. 5 is a drawing illustrating an example (4) of a V2X transmission mode.
[Fig. 6] Fig. 6 is a drawing illustrating an example (5) of a V2X transmission mode.
[Fig. 7] Fig. 7 is a drawing illustrating an example (1) of a V2X communication type.
[Fig. 8] Fig. 8 is a drawing illustrating an example (2) of a V2X communication type.
[Fig. 9] Fig. 9 is a drawing illustrating an example (3) of a V2X communication type.
[Fig. 10] Fig. 10 is a sequence diagram illustrating an example (1) of V2X operation.
[Fig. 11] Fig. 11 is a sequence diagram illustrating an example (2) of V2X operation.
[Fig. 12] Fig. 12 is a sequence diagram illustrating an example (3) of V2X operation.
[Fig. 13] Fig. 13 is a sequence diagram illustrating an example (4) of V2X operation.
[Fig. 14] Fig. 14 is a drawing illustrating an example of a sensing operation.
[Fig. 15] Fig. 15 is a flowchart illustrating an example of a preemption operation.
[Fig. 16] Fig. 16 is a drawing illustrating an example of a preemption operation.
[Fig. 17] Fig. 17 is a drawing illustrating an example of a partial sensing operation.
[Fig. 18] Fig. 18 is a flowchart illustrating an example (1) of communication in an embodiment of the present invention.
[Fig. 19] Fig. 19 is a flowchart illustrating an example (2) of communication in an embodiment of the present invention.
[Fig. 20] Fig. 20 is a drawing illustrating an example of a functional configuration of a base station 10 in an embodiment of the present invention.
[Fig. 21] Fig. 21 is a drawing illustrating an example of a functional configuration of a terminal 20 in an embodiment of the present invention.
[Fig. 22] Fig. 22 is a drawing illustrating an example of a hardware configuration of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used as appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

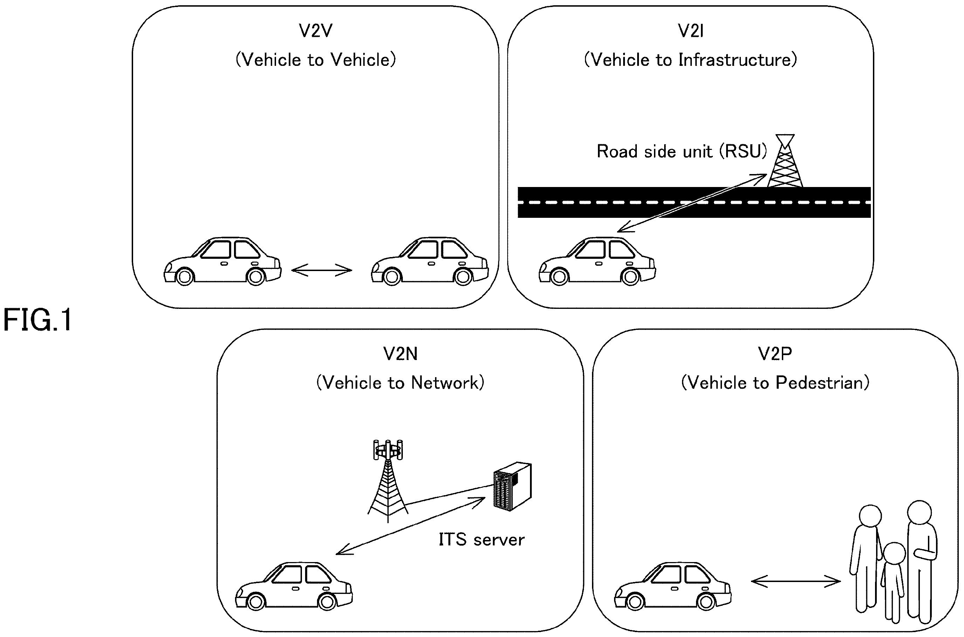

Fig. 1 is a drawing illustrating V2X. In 3GPP, enhancing D2D functions to realize V2X (Vehicle to Everything) or eV2X (enhanced V2x) has been discussed and technical specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is held by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, QoS (Quality of Service) control.

With respect to LTE V2X or NR V2X, it is assumed that discussions may be not limited to 3GPP technical specifications in the future. For example, it is expected that discussions will be held regarding: how to secure interoperability; how to reduce cost by implementing higher layers; how to use or how to switch multiple RATs (Radio Access Technologies); how to handle regulations of each country; how to obtain and distribute data of LTE/NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), terminals capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) Resource arrangement in the time domain
2) Resource arrangement in the frequency domain
3) Synchronization signal that should be referred to (including SLSS (Sidelink Synchronization Signal))
4) Reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is enabled (available). In Mode 4, the terminal 20 autonomously selects transmission resources from a resource pool.

It should be noted that a slot in an embodiment of the present invention may be read on (replaced with) a symbol, a mini slot, a subframe, a radio frame, or a TTI (Transmission Time Interval). Further, a cell in an embodiment of the present invention may be read on (replaced with) a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, but may be any type of terminal that performs D2D communication. For example, the terminal 20 may be a terminal carried by a user, such as a smart phone, or an IoT (Internet of Things) device, such as a smart meter.

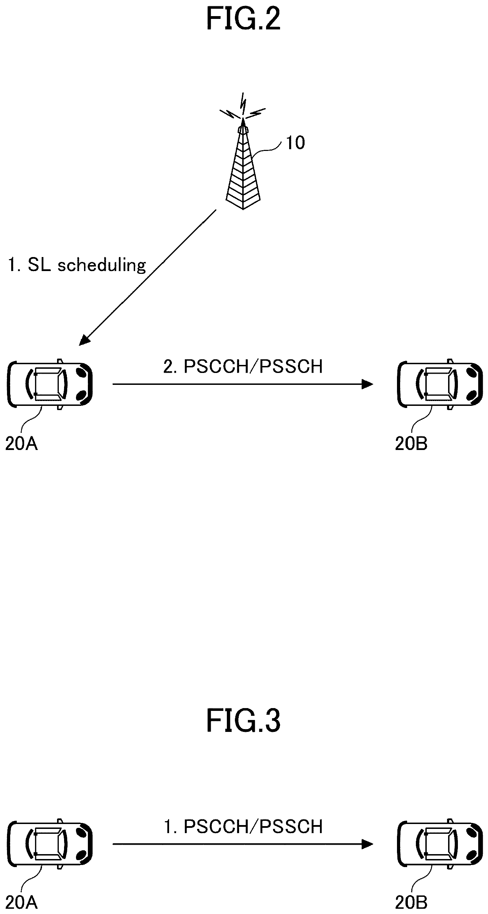

Fig. 2 is a drawing illustrating an example (1) of a V2X transmission mode. In a transmission mode of sidelink communication illustrated in Fig. 2, in step 1, a base station 10 transmits a sidelink scheduling to a terminal 20A. Next, the terminal 20A transmits PSCCH (Physical Sidelink Control Channel) and PSSCH (Physical Sidelink Shared Channel) to a terminal 20B based on the received scheduling (step 2). The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). It should be noted that the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the UE itself performs resource selection.

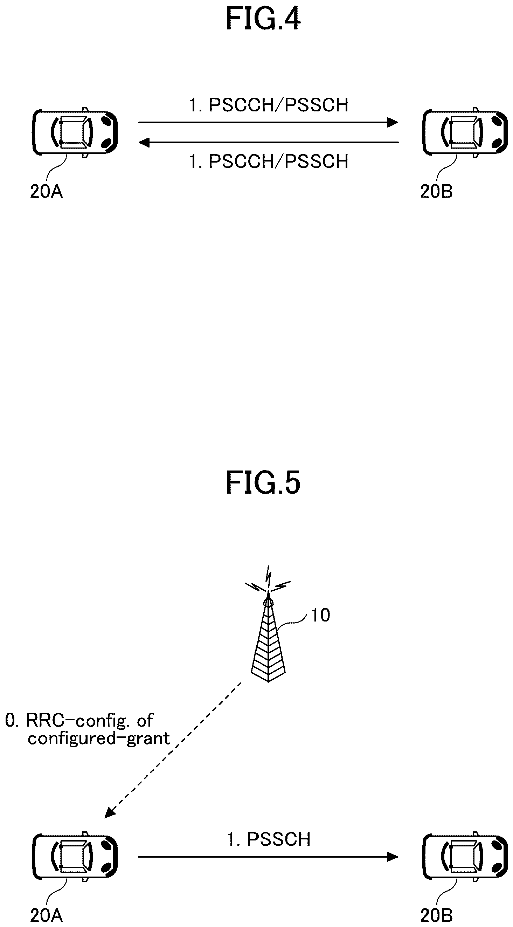

Fig. 4 is a drawing illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH to the terminal 20A using autonomously selected resources (step 1). The transmission mode of sidelink communication illustrated in Fig. 4 may be referred to as a sidelink transmission mode 2a in NR. In the sidelink transmission mode 2 in NR, the terminal 20 itself performs resource selection.

Fig. 5 is a drawing illustrating an example (4) of a V2X transmission mode. In the transmission mode of sidelink communication shown in Fig. 5, in step 0, the sidelink resource pattern is transmitted from the base station 10 to the terminal 20A via an RRC (Radio Resource Control) configuration, or is configured in advance. Subsequently, the terminal 20A transmits PSSCH to the terminal 20B, based on the resource pattern (step 1). The transmission mode of sidelink communication illustrated in Fig. 5 may be referred to as a sidelink transmission mode 2c in NR.

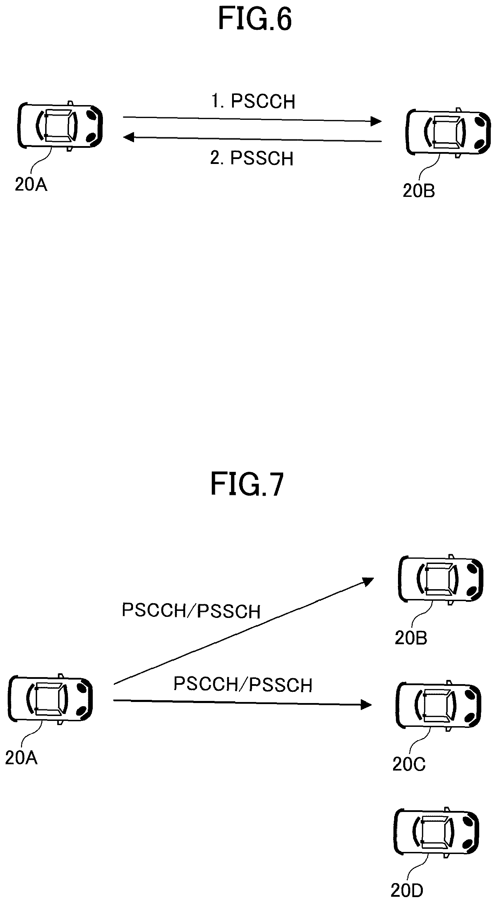

Fig. 6 is a drawing illustrating an example (5) of a V2X transmission mode. In the side-link communication transmission mode illustrated in Fig. 6, in step 1, the terminal 20A transmits sidelink scheduling to the terminal 20B via PSCCH. Next, the terminal 20B transmits PSSCH to the terminal 20A based on the received scheduling (step 2) . The transmission mode of sidelink communication illustrated in Fig. 6 may be referred to as a sidelink transmission mode 2d in NR.

Fig. 7 is a drawing illustrating an example (1) of a V2X communication type. The sidelink communication type illustrated in Fig. 7 is unicast. The terminal 20A transmits PSCCH and PSSCH to terminal 20. In an example illustrated in Fig. 7, the terminal 20A performs unicast to the terminal 20B, and performs unicast to a terminal 20C.

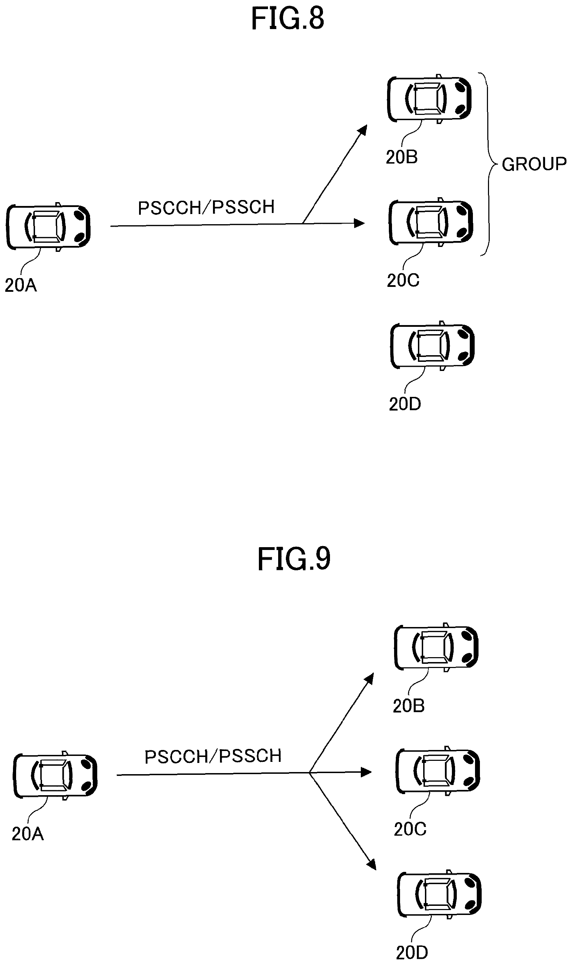

Fig. 8 is a drawing illustrating an example (2) of a V2X communication type. The sidelink communication type illustrated in Fig. 8 is groupcast. The terminal 20A transmits PSCCH and PSSCH to a group to which one or more terminals 20 belong. In an example illustrated in Fig. 8, the group includes a terminal 20B and the terminal 20C, and the terminal 20A performs groupcast to the group.

Fig. 9 is a drawing illustrating an example (3) of a V2X communication type. The sidelink communication type illustrated in Fig. 9 is broad-cast. The terminal 20A transmits PSCCH and PSSCH to one or more terminals 20. In an example illustrated in Fig. 9, the terminal 20A performs broadcast to the terminal 20B, the terminal 20C, and a terminal 20D. Note that the terminal 20A shown in Figs. 7 to 9 may be referred to as a header UE.

In addition, it is expected that HARQ (Hybrid automatic repeat request) is supported for unicast and groupcast of sidelink in NR-V2X. In addition, SFCI (Sidelink Feedback Control Information) containing a HARQ response is defined in NR-V2X. In addition, it is being discussed that SFCI is transmitted via PSFCH (Physical Sidelink Feedback Channel).

Note that, in the following description, it is assumed that PSFCH is used in the transmission of HARQ-ACK on sidelink. However, this is just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

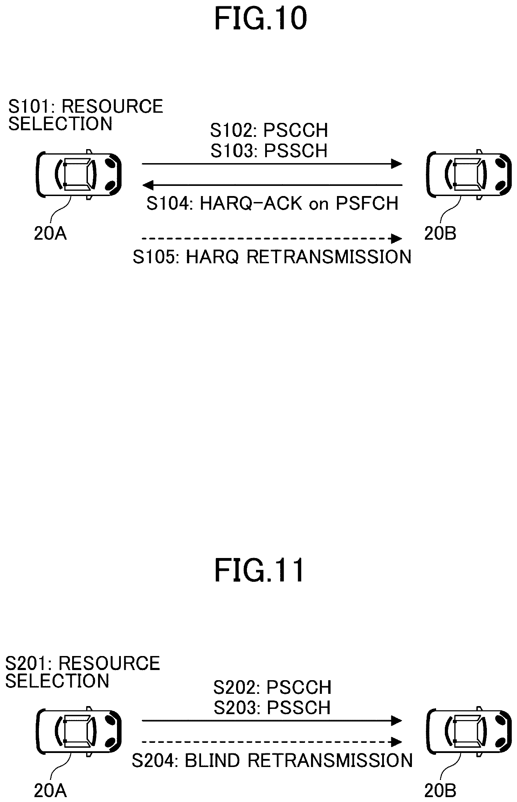

Fig. 10 is a sequence diagram illustrating an example (1) of V2X operation. As shown in Fig. 10, the wireless communication system according to an embodiment of the present invention may include a terminal 20A and a terminal 20B. Note that there are many user devices, but Fig. 10 shows a terminal 20A and a terminal 20B as examples.

Hereinafter, when the terminals 20A, 20B, or the like are not particularly distinguished, the terminals 20A, 20B, or the like will be simply described as "terminal 20" or "user device". Fig. 10 shows, for example, a case where both the terminal 20A and the terminal 20B are within a coverage of a cell. However, the operation in an embodiment of the present invention embodiment can be applied to a case where the terminal 20B is outside the coverage.

As described above, in an embodiment, the terminal 20 is, for example, a device mounted in a vehicle such as an automobile and has a cellular communication function as a UE in LTE or NR and a sidelink function. Terminal 20 may be a conventional portable terminal (such as a smartphone). Further, the terminal 20 may also be an RSU. The RSU may be a UE-type RSU having the function of a UE or a gNB-type RSU having the function of a base station device.

Note that the terminal 20 need not be a single housing device. For example, even when various sensors are arranged and distributed in a vehicle, a device including the various sensors may be a terminal 20.

Further, processing contents of sidelink transmission data of the terminal 20 are basically the same as those of UL transmission in LTE or NR. For example, the terminal 20 scrambles a codeword of the transmission data, modulates to generate complex-valued symbols, and maps the complex-valued symbols to one or two layers, and performs precoding. Further, the precoded complex-valued symbols are mapped to a resource element to generate a transmission signal (e.g., complex-valued time-domain SC-FDMA signal), and the generated signal is transmitted from each antenna port.

It is noted that the base station 10 has a function of cellular communication as a base station in LTE or NR and a function of enabling communication of the terminal 20 according to an embodiment of the present invention (e.g., resource pool setting, resource allocation, etc.). Further, the base station 10 may also be an RSU (gNB-type RSU).

Further, in the wireless communication system according to an embodiment of the present invention, a signal waveform used by the terminal 20 for SL or UL may be OFDMA, SC-FDMA, or other signal waveforms.

In step S101, the terminal 20A autonomously selects a resource to be used for PSCCH and PSSCH from a resource selection window having a predetermined period. The resource selection window may be configured to the terminal 20 by the base station 10. Here, the predetermined period of the resource selection window may be specified by an implementation condition of the terminal such as a processing time or a maximum allowable packet delay time, or may be specified in advance by technical specifications, and the predetermined period may be referred to as a section in a time domain.

In step S102 and Step S103, the terminal 20A transmits, using the resource autonomously selected in step S101, SCI (Sidelink Control Information) via PSCCH and/or PSSCH and transmits SL data via PSSCH. For example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected resource in the SCI and transmit the included information.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and the PSSCH using an autonomously selected resource.

Note that in a case where HARQ control with HARQ feedback is not performed, step S104 and step S105 need not be performed.

Fig. 11 is a sequence diagram illustrating an example (2) of V2X operation. A non-HARQ-control-based blind retransmission may be performed to improve the transmission success rate or reach distance.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits, using the resource autonomously selected in step S201, an SCI via PSCCH and/or PSSCH, and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH and/or PSSCH and the SL data via PSSCH to the terminal 20B. The retransmission in step S204 may be performed multiple times.

It is noted that, if the blind retransmission is not performed, step S204 need not be performed.

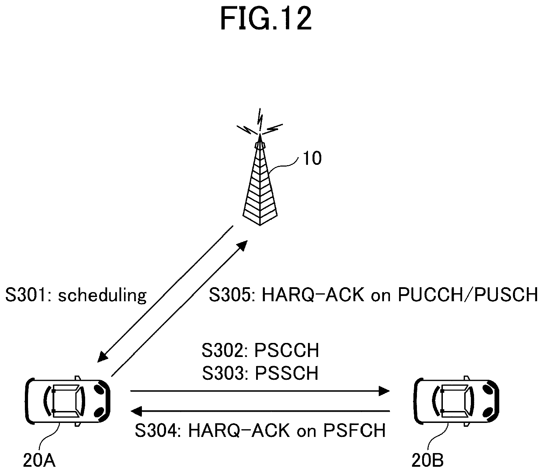

Fig. 12 is a sequence diagram illustrating an example (3) of V2X operation. The base station 10 may perform scheduling of the sidelink. That is, the base station 10 may determine a sidelink resource to be used by the terminal 20 and transmit information indicating the resource to the terminal 20. In addition, in a case where HARQ control with HARQ feedback is to be applied, the base station 10 may transmit information indicating a PSFCH resource to the terminal 20.

In step S301, the base station 10 performs SL scheduling by sending DCI (Downlink Control Information) to the terminal 20A via PDCCH. Hereafter, for the sake of convenience, the DCI for SL scheduling is called SL scheduling DCI.

Further, in Step S301, it is assumed that the base station 10 also transmits DCI for DL scheduling (which may be referred to as DL assignment) to the terminal 20A via the PDCCH. Hereafter, for the sake of convenience, the DCI for DL scheduling is called a DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH and/or PSSCH and transmits SL data via PSSCH. Note that, in the SL scheduling DCI, a PSSCH resource alone may be specified. In this case, for example, the terminal 20A may transmit the PSCCH using a frequency resource adjacent to the PSSCH frequency resource with the same time resource as at least a portion of the time resource of the PSSCH.

The terminal 20B receives the SCI (PSCCH and/or PSSCH) and the SL data (PSSCH) transmitted from the terminal 20A. The SCI received via the PSCCH and/or PSSCH includes information of a PSFCH resource for the terminal 20B to send a HARQ-ACK for reception of the data.

The information of the resource is included in the DL scheduling DCI or SL scheduling DCI transmitted from the base station 10 in S301, and the terminal 20A acquires the information of the resource from the DL scheduling DCI or the SL scheduling DCI and includes the acquired information in the SCI. Alternatively, the DCI transmitted from the base station 10 may exclude the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits the HARQ-ACK using, for example, a PUCCH (Physical uplink control channel) resource specified by the DL scheduling DCI (or SL scheduling DCI) at the timing (e.g., slot-by-slot timing) specified by the DL scheduling DCI (or SL scheduling DCI), and the base station 10 receives the HARQ-ACK. The HARQ-ACK codebook may include HARQ-ACK received from the terminal 20B or HARQ-ACK generated based on PSFCH that is not received, and HARQ-ACK for the DL data. Note, however, the HARQ-ACK for DL data is not included if DL data is not allocated. In NR Rel.16, the HARQ-ACK codebook does not include HARQ-ACK for DL data.

Note that in a case where HARQ control with HARQ feedback is not performed, step S304 and/or step S305 need not be performed.

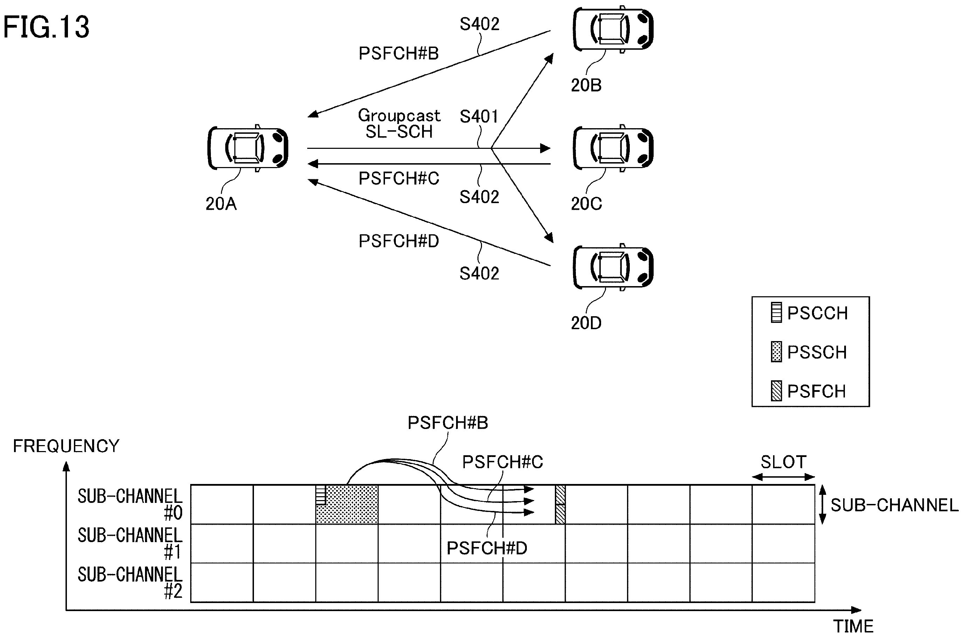

Fig. 13 is a sequence diagram illustrating an example (4) of V2X operation. As described above, it is supported in the NR sidelink that the HARQ response is transmitted via PSFCH. It is noted that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, ACK and NACK being identified by the difference of sequences and/or cyclic shifts. The format of PSFCH is not limited to the above-described format. PSFCH resources may be located at the last symbol of a slot or at the multiple symbols at the end of a slot. Further, a period N may be configured or predefined for the PSFCH resource. The period N may be configured or predefined in a unit of slot.

In Fig. 13, the vertical axis corresponds to the frequency domain and the horizontal axis corresponds to the time domain. PSCCH may be arranged at the first (beginning) symbol, may be arranged at a plurality of first symbols of a slot, or may be arranged at a plurality of symbols from a symbol other than the first symbol of a slot. PSFCH resources may be arranged at the last (end) symbol of a slot, or may be arranged at a plurality of last symbols. Note that consideration of a symbol for AGC (Automatic Gain Control) and a symbol for switching transmission/reception may be omitted for the above "beginning of a slot" and "end of a slot". That is, for example, in a case where one slot is composed of 14 symbols, the "beginning of a slot" and the "end of a slot" may respectively mean a first symbol and a last symbol in 12 symbols in which the first symbol and the last symbol are excluded. In an example shown in Fig. 13, three sub-channels are configured in a resource pool, and two PSFCHs are arranged in the third slot after a slot in which PSSCH is arranged. Arrows from PSSCH to PSFCH indicate an example of PSFCH associated with PSSCH.

In a case of groupcast option 2 in which an ACK or NACK is transmitted in a HARQ response in the NR-V2X groupcast, it is necessary to determine resources used for transmitting and receiving PSFCH. As shown in Fig. 13, in step S401, the terminal 20A, which is the transmitting side terminal 20, performs groupcast with respect to the terminal 20B, the terminal 20C, and the terminal 20D, which are the receiving side terminals 20, via SL-SCH. In the subsequent step S402, the terminal 20B uses PSFCH#B, the terminal 20C uses PSFCH#C, and the terminal 20D uses PSFCH#D to transmit HARQ responses to the terminal 20A. Here, as shown in an example of Fig. 13, in a case where the number of PSFCH resources available is less than the number of receiving side terminals 20 belonging to the group, it is necessary to determine how to allocate PSFCH resources. It is noted that the transmitting side terminal 20 may obtain the number of the receiving side terminals 20 in the groupcast. Note that, in groupcast option 1, only NACK is transmitted as a HARQ response, and ACK is not transmitted.

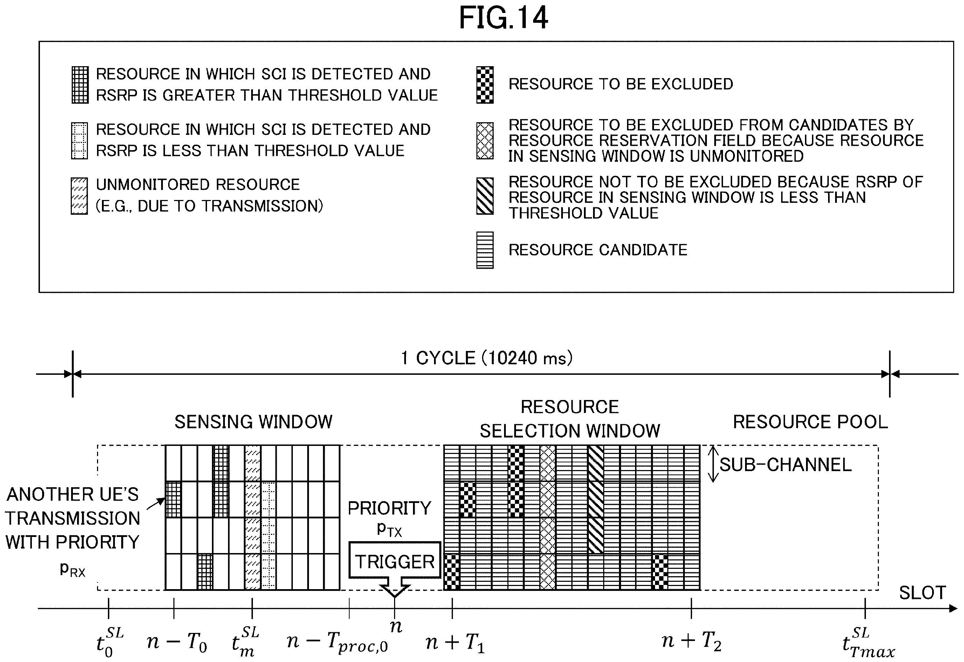

Fig. 14 is a drawing illustrating an example of a sensing operation in NR. In the resource allocation mode 2, the terminal 20 selects a resource and performs transmission. As illustrated in Fig. 14, the terminal 20 performs sensing in a sensing window in a resource pool. According to the sensing, the terminal 20 receives a resource reservation field or a resource assignment field included in an SCI transmitted from another terminal 20, and identifies available resource candidates in a resource selection window in the resource pool, based on the received field. Subsequently, the terminal 20 randomly selects a resource from the available resource candidates.

Further, as shown in Fig. 14, the configuration of the resource pool may have a period. For example, the period may be a period of 10,240 milliseconds. Fig. 14 is an example in which slots from slot t₀^{SL} to slot t_{Tmax}^{SL} are configured as a resource pool. The resource pool in each cycle may have an area configured by, for example, a bitmap.

In addition, as illustrated in Fig. 14, it is assumed that a transmission trigger in the terminal 20 occurs in a slot n and the priority of the transmission is p_{TX}. In the sensing window from slot n-T₀ to the slot immediately before the slot n-T_{proc, 0}, the terminal 20 can detect, for example, that another terminal 20 is performing transmission having priority p_{RX}. In a case where an SCI is detected in the sensing window and the RSRP (Reference Signal Received Power) exceeds a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTX, pRX} configured or defined for each resource in the sensing window, based on the priority p_{TX} and the priority p_{RX}.

In addition, a resource in the resource selection window that is a candidate of resource reservation information corresponding to a resource that is not monitored in the sensing window due to transmission, such as the slot tₘ^{SL} shown in Fig. 14, is excluded.

In the resource selection window from slots n+T₁ to n+T₂, as shown in Fig. 14, resources occupied by other UEs are identified, and resources from which the identified resources are excluded become available resource candidates. Assuming that the set of available resource candidates is S_{A}, in a case where the S_{A} is less than 20% of the resource selection window, the resource identification may be performed again by raising the threshold value Th_{pTX, pRX} configured for each resource in the sensing window by 3 dB. That is, by raising the threshold value Th_{pTX, pRX} and performing the resource identification again, resources that are not excluded because the RSRP is below the threshold value may be increased, and the set S_{A} of resource candidates may become greater than 20% of the resource selection window. The operation of raising the threshold value Th_{pTX, pRX} configured for each resource in the sensing window by 3 dB, and of performing the resource identification again in a case where the S_{A} is less than 20% of the resource selection window, may be repeatedly performed.

The lower layer of the terminal 20 may report the S_{A} to the higher layer. The higher layer of the terminal 20 may perform random selection for the S_{A} to determine a resource to be used. The terminal 20 may perform sidelink transmission using the determined resource.

Although an operation of the transmission-side terminal 20 has been described with reference to Fig. 14, the reception-side terminal 20 may detect data transmission from another terminal 20, based on a result of sensing or partial sensing and receive data from another terminal 20.

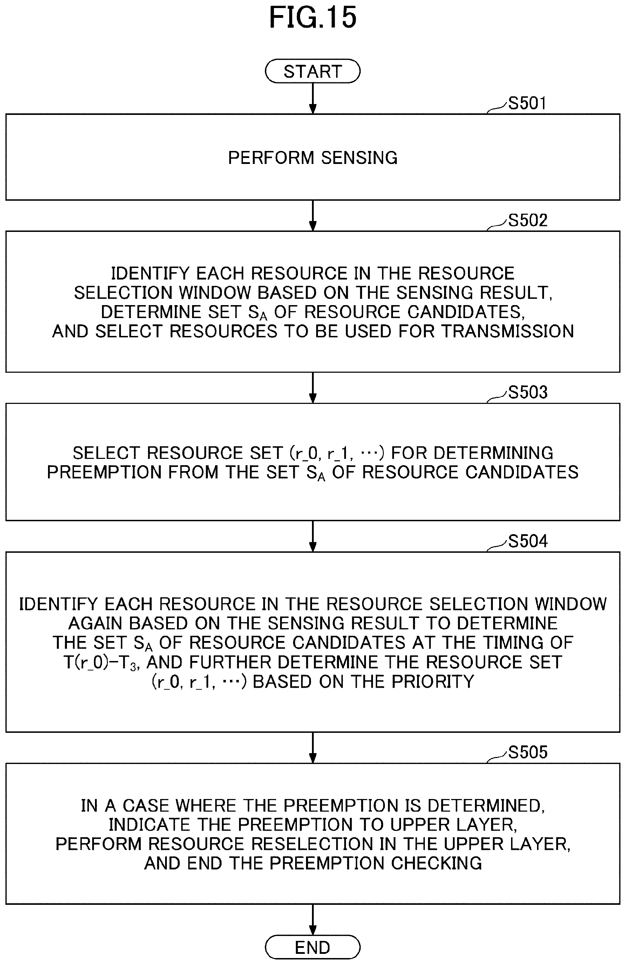

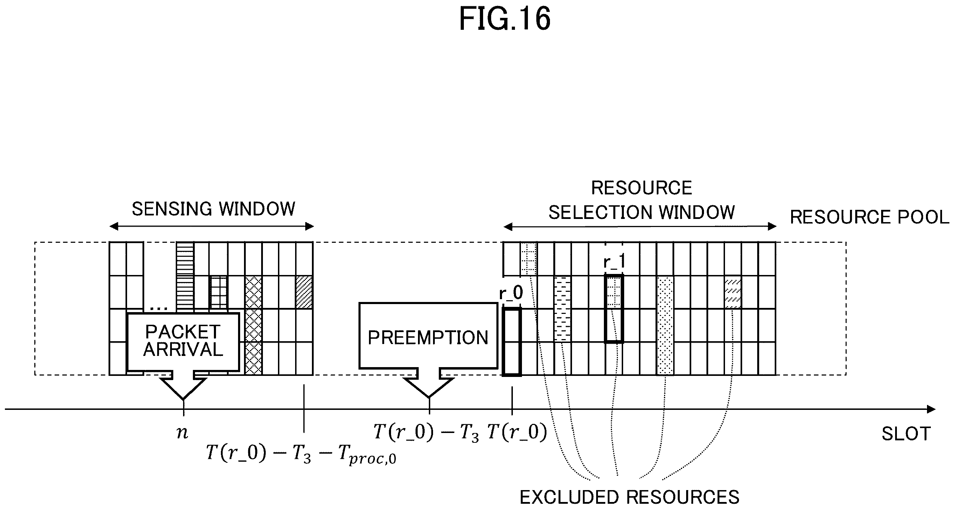

Fig. 15 is a flowchart illustrating an example of preemption in NR. Fig. 16 is a drawing illustrating an example of preemption in NR. In step S501, the terminal 20 performs sensing in the sensing window. In a case where the terminal 20 performs power-saving operation, sensing may be performed for a predetermined limited period of time. Subsequently, the terminal 20 determines a set S_{A} of resource candidates by identifying each resource in the resource selection window based on the sensing result, and selects a resource to be used for transmission (S502). Subsequently, the terminal 20 selects a resource set (r_0, r_1, ...) for determining preemption from the set S_{A} of resource candidates (S503). The resource set may be indicated to the PHY layer from the higher layer as a resource for determining whether or not the resource is preempted.

In step S504, the terminal 20 determines the set S_{A} of resource candidates by re-identifying each resource in the resource selection window based on the sensing result and determines preemption for the resource set (r 0, r_1, ...) based on the priority at the timing T(r_0)-T₃ shown in Fig. 16. For example, r_1 shown in Fig. 16 is not included in the S_{A} because the SCI transmitted from the other terminal 20 is detected by re-sensing. In a case where preemption is enabled, in a case where the value prio_RX indicating the priority of the SCI transmitted from the other terminal 20 is lower than the value prio_TX indicating the priority of the transport block transmitted from the terminal 20 itself, the terminal 20 determines that the resource r_1 is preempted. Note that the lower the value indicating the priority, the higher the priority. That is, in a case where the value prio_RX indicating the priority of the SCI transmitted from the other terminal 20 is higher than the value prio_TX indicating the priority of the transport block transmitted from the terminal 20 itself, the terminal 20 does not exclude the resource r_₁ from the S_{A}. Alternatively, in a case where preemption is valid only for a specific priority (e.g., in a case where sl-PreemptionEnable is one of pl1, p12, ..., pl8), this priority is referred to as prio_pre. At this point, in a case where the value prio_RX indicating the priority of the SCI transmitted from the other terminal 20 is lower than prio_pre, and prio_RX is lower than the value prio_TX indicating the priority of the transport block transmitted from the terminal 20 itself, the terminal 20 determines that the resource r_1 has been preempted.

In step S505, in a case where the preemption is determined in step S504, the terminal 20 indicates, to the higher layer, the preemption, reselects the resource in the higher layer, and ends the preemption check.

Note that, in a case where re-evaluation is performed in place of the preemption check, in a case where the S_{A} does not contain resources of the resource set (r_0, r_1, ...) after the set S_{A} of resource candidates is determined in step S504, the resources are not used and resources are reselected in the higher layer.

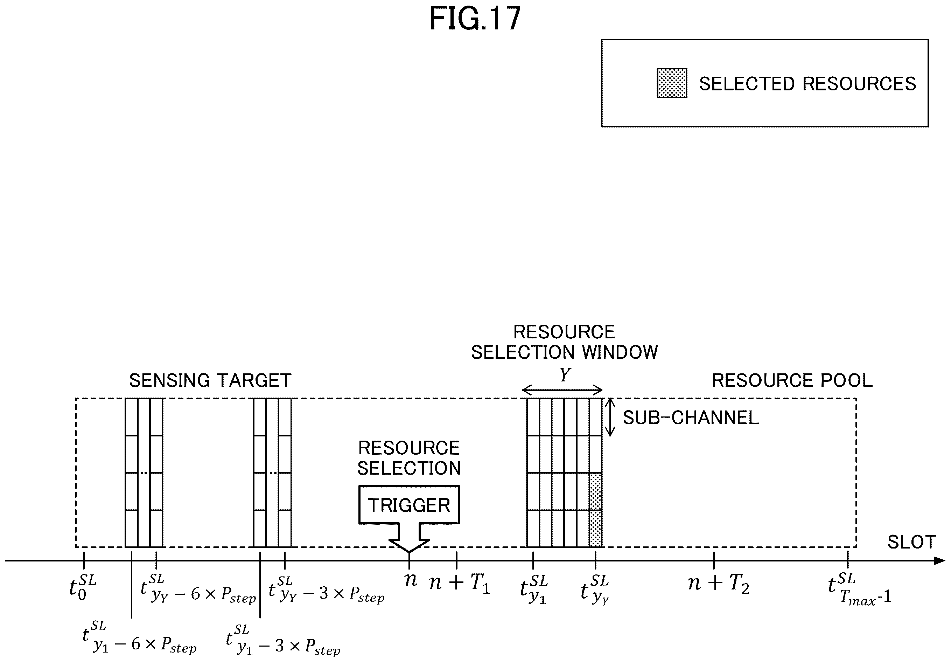

Fig. 17 is a drawing illustrating an example of a partial sensing operation in NR. In a case where the partial sensing is configured by the higher layer in the NR sidelink, the terminal 20 selects the resources and performs transmission, as illustrated in Fig. 17. As illustrated in Fig. 17, the terminal 20 performs partial sensing to a portion of the sensing window or a sensing target in the resource pool. According to the partial sensing, the terminal 20 receives the reserved field contained in the SCI transmitted from the other terminal 20 and identifies the available resource candidates within the resource selection window in the resource pool based on the field. Subsequently, the terminal 20 randomly selects resources from the available resource candidates.

Fig. 17 is an example in which slots from slot t₀^{SL} to slot t_{Tmax-1}^{SL} are configured as a resource pool. With respect to the resource pool, the target area may be configured, for example, by a bitmap. As illustrated in Fig. 17, the transmit trigger at the terminal 20 occurs at slot n. As illustrated in Fig. 17, Y slots from slot t_{y1}^{SL} to slot t_{yY}^{SL} within the slots from slot n+T₁ to slot n+T₂ may be configured as a resource selection window.

The terminal 20 may detect, for example, that the other terminal 20 performs transmission in one or more sensing targets of Y slot length of slots from slot t_{y1-k×Pstep}^{SL} to slot t_{yY-k×Pstep}^{SL}. The k may be determined, for example, by a 10-bit bitmap. Fig. 17 illustrates an example in which the third and sixth bits of the bitmap are configured to be "1" indicating that partial sensing is to be performed. That is, in Fig. 17, slots from slot t_{y1-6×Pstep}^{SL} to slot t_{yY-6×Pstep}^{SL}, and slots from slot t_{y1-3×Pstep}^{SL} to slot t_{yY-3×Pstep}^{SL} are configured as sensing targets. As noted above, the kth bit of the bitmap may correspond to a sensing window from slot t_{y1-k×Pstep}^{SL} to slot t_{yY-k×Pstep}^{SL}. Note that yᵢ corresponds to the index (1...Y) in the Y slots.

It should be noted that k is set or specified in advance with a bit map of 10 bits, and Pₛₜₑₚ may be 100 ms. However, when SL communication is performed with DL and UL carriers, the Pₛₜₑₚ may be (U/(D+S+U)*100 ms. U corresponds to the number of UL slots, D corresponds to the number of DL slots, and S corresponds to the number of special slots.

In a case where the SCI is detected in the above sensing target and the RSRP is greater than the threshold value, resources in the resource selection window corresponding to the resource reservation field of the SCI are to be excluded. Also, in a case where the SCI is detected in the sensing target and the RSRP is less than the threshold value, resources in the resource selection window corresponding to the resource reservation field of the SCI are not to be excluded. The threshold value may be, for example, Th_{pTX,} p_{RX}, which is configured or defined for each resource in the sensing target based on the transmission priority p_{TX} and the reception priority p_{RX}.

As illustrated in Fig. 17, in the resource selection window in which slots are configured within the section [n+T₁, n+T₂], the terminal 20 identifies a resource occupied by the other UE, and the resources from which the resource is excluded become available resource candidates. The Y slots is not required to be contiguous. When the set of available resource candidates is referred to as S_{A}, in a case where S_{A} is less than 20% of the resources in the resource selection window, the threshold value configured for each resource of the sensing target Th_{pTX,pRX} may be increased by 3dB and the resource identification may be performed again.

That is, by raising the threshold value Th_{pTX,pRX} and performing the resource identification again, resources may be increased that are not excluded because RSRP is less than the threshold value. In addition, the RSSI of each resource in the S_{A} may be measured and a resource with the least RSSI may be added to the set S_{B}. The operation of adding a resource with the least RSSI included in the S_{A} to the S_{B} may be repeated until the set S_{B} of the resource candidates becomes equal to or greater than 20% of the resource selection window.

The lower layer of the terminal 20 may report the S_{B} to the higher layer. The higher layer of the terminal 20 may perform random selection with respect to the S_{B} to determine the resources to be used. The terminal 20 may perform sidelink transmission using the determined resources. Note that the terminal 20 may use the resource periodically for a predetermined number of times (e.g., Cᵣₑₛₑₗ times) without sensing after the resource is secured once.

Here, power saving based on random resource selection and partial sensing is being discussed in the NR release 17 sidelink. For example, for the power saving, random resource selection and partial sensing of the sidelink in LTE release 14 may be applied to the resource allocation mode 2 of the NR release 16 sidelink. The terminal 20 to which partial sensing is applied performs reception and sensing only in specific slots in the sensing window.

In addition, eURLLC (enhanced Ultra Reliable Low Latency Communication) is being discussed with inter-UE coordination as the baseline in NR release 17 sidelink. For example, the terminal 20A may share information indicating a resource set with the terminal 20B and the terminal 20B may take the information into account in resource selection for transmission.

For example, as a resource allocation method in the sidelink, the terminal 20 may perform full sensing as illustrated in Fig. 14. In addition, the terminal 20 may perform partial sensing in which the terminal 20 performs resource identification by sensing only limited resources as compared to full sensing, and selects resources from the identified resource set. Also, the terminal 20 may perform random selection in which the terminal 20 determines resources in the resource selection window as an identified resource set without performing resource exclusion from the resources in the resource selection window, and performs resource selection from the identified resource set.

A method in which random selection is performed at the time of resource selection and sensing information is used at the time of reevaluation or preemption check may be treated as partial sensing or may be treated as random selection.

In the release 17, operations may be defined by assuming two types of terminals 20. One is type A, and the type A terminal 20 does not have a capability of receiving any sidelink signals and channels. However, PSFCH and S-SSB may be received as an exception.

The other is type D, and the type D terminal 20 has a capability of receiving all sidelink signals and channels defined in release 16. However, receiving some of the sidelink signals and channels is not excluded.

In addition, in release 17, multiple resource allocation methods may be configured for a resource pool. In addition, SL-DRX (Discontinuous Reception) is supported as one of the power saving functions. That is, the reception operation is performed only for a predetermined time interval.

On the other hand, with respect to the resource allocation operation to be used, there has been no technical specification regarding how to define the time interval during which no reception operation is to be performed, i.e., the DRX sleep period. In particular, the consistency between the sensing section and the DRX sleep period has not been considered.

Thus, a predetermined DRX ON period may be determined based on the resource allocation operation in the terminal 20 that performs the predetermined resource allocation operation. Note that the reception operation may be performed or need not be performed during the DRX ON period. Alternatively, a DRX sleep period may be determined instead of the DRX ON period, and a time other than the sleep period may be determined to be an ON period.

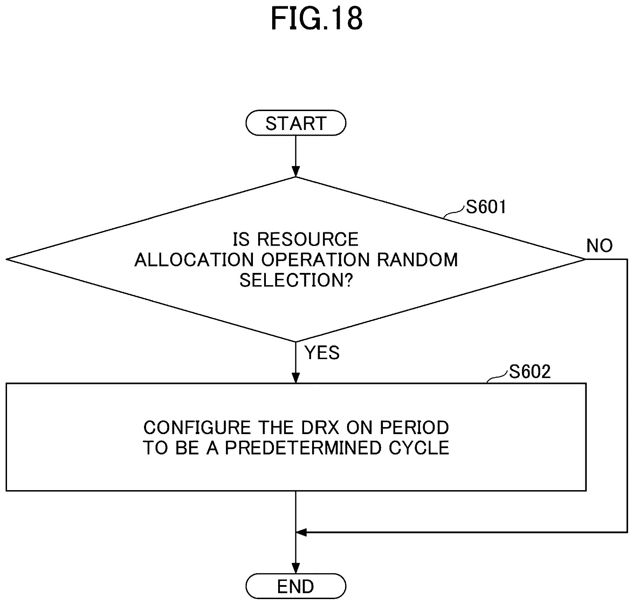

Fig. 18 is a flowchart illustrating an example (1) of communication in an embodiment of the present invention. In step S601, the terminal 20 determines whether or not the resource allocation operation is random selection. In a case where the resource selection operation is random selection (YES in S601), the process proceeds to step S602, and in a case where the resource selection operation is not random selection, the flow ends. In step S602, the terminal 20 configures the DRX ON period to be a predetermined period.

The predetermined period in step S602 may be configured by the base station 10 or may be predefined.

In a case where the sensing operation is performed from slot n, which is a timing related to the resource selection, for the sake of re-evaluation with respect to the selected resource or the randomly selected resource, or for the sake of preemption check with respect to the randomly selected resource, during the DRX operation whose period is configured in step S602, the reception operation may be performed during a time section from slot n to slot m, the slot m being a timing related to the end of the transport block transmission, even if the time section is originally supposed to be a DRX sleep period. The timing related to the resource selection may be a resource selection trigger timing, a timing going back for predetermined time from the resource selection candidate, or a timing determined based on these timings.

After the time section from slot n to slot m, the DRX ON period may be determined based on the timing of the original DRX ON period or may be determined based on the time section from slot n to slot m. During the time section from slot n to slot m, only PSCCH (1st stage SCI) reception may be performed, or the reception including PSSCH (2nd stage SCI and/or SL-SCH) reception may be performed. The slot m may be a timing related to the last transmission slot or a timing related to the HARQ feedback for the last transmission slot.

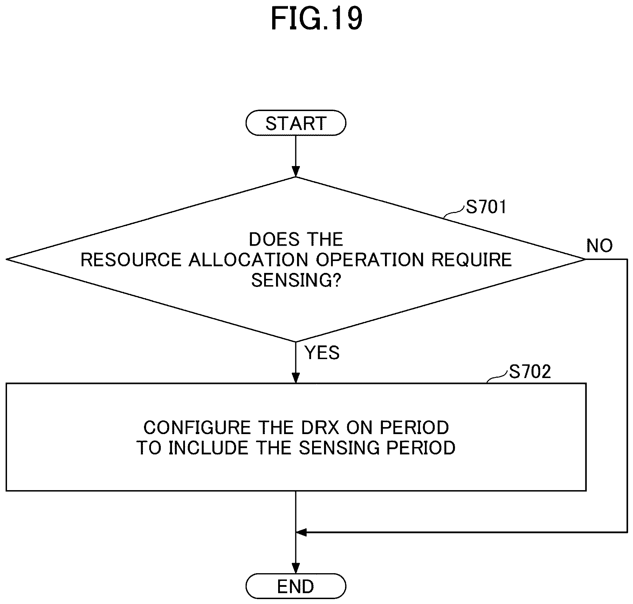

Fig. 19 is a flowchart illustrating an example (2) of communication in an embodiment of the present invention. In step S701, the terminal 20 determines whether or not the resource allocation operation requires sensing. In a case where the resource allocation operation requires sensing (YES in S701), the process proceeds to step S702, and in a case where the resource allocation operation does not require sensing (NO in S701), the flow ends. In step S702, the terminal 20 configures the DRX ON period to include a sensing period. The sensing in step S701 may be partial sensing or full sensing.

In step S702, the DRX ON period may be determined based on the reserved period (reservation periodicity) configured or preconfigured in the resource pool. In addition, the DRX ON period may be determined based on slot n (e.g., resource selection timing), which is the timing related to the resource selection. The slot n may mean multiple contiguous slots.

For example, when a resource of slot n+X is selected as a resource candidate, the slot n+X-P k becomes the DRX ON period. P k is the k-th cycle of the configured or pre-configured reservation periodicity. In a case where the sensing operation is performed from slot n which is the timing related to the resource selection, the reception operation may be performed during a time section from slot n to slot m which is the timing related to the end of the transmission of the transport block even if the time section is originally supposed to be the DRX sleep period. Note that, with respect to the time section from slot n to slot m, the reception operation may be performed even if the time section is a time section that is originally supposed to be the DRX ON period.

The timing related to the resource selection may be a resource selection trigger timing, a timing going back for a predetermined time from the resource selection candidate, or a timing determined based on these timings, and is not limited to these timings. After the time section from slot n to slot m, the DRX ON period may be determined based on the timing of the original DRX ON period or may be determined based on the time section from slot n to slot m. During the time section from slot n to slot m, only PSCCH (1st stage SCI) reception may be performed, or the reception including PSSCH (2nd stage SCI and/or SL-SCH) reception may be performed. The slot m may be a timing related to the last transmission slot or a timing related to the HARQ feedback for the last transmission slot.

In addition, there may be periodic slots that could become a timing related to the resource selection. For example, slot a+i*P, which is the timing of the period P slots from a certain slot a, may correspond to the above slot n. The start-point slot a may be associated with a DFN (Direct Frame Number) or a resource pool configuration. The period P may be pre-configured or determined by UE implementation based on the service type.

Note that, a DRX ON period of a predetermined period may be additionally configured for a DRX operation. The predetermined period may be configured or predefined. In addition, step S701 and step S702 illustrated in Fig. 19 may be performed only in a case where the transmission of the terminal itself is a periodic transmission. Step S601 and step S602 illustrated in Fig. 18 may be performed in a case where transmission of the terminal itself is non-periodic.

The above described embodiment may be applied to the operation of one terminal 20 to configure or allocate transmission resources of another terminal 20. That is, a resource configuration or allocation may be performed so that the above-described embodiments are satisfied.

The above described embodiments are not limited to V2X terminals, but may be applied to terminals that perform D2D communication.

The operations related to the embodiments described above may be performed only in a particular resource pool. For example, the operations related to the embodiments described above may be performed only in the resource pool available for the terminal 20 of release 17 or later.

According to the embodiment described above, the terminal 20 can determine the ON period or sleep period in the DRX operation based on the resource allocation operation. In addition, it is possible to determine the ON period or sleep period in the DRX operation while suppressing the impact on the resource allocation operation.

That is, in direct communication between terminals, the DRX (Discontinuous Reception) operation can be adjusted to fit the operation at the time of autonomous resource selection.

### (Device configuration)

Next, a functional configuration example of the base station 10 and the terminal 20 for performing the processes and operations described above will be described. The base station 10 and terminal 20 include functions for implementing the embodiments described above. However, each of the base stations 10 and the terminal 20 may include only some of the functions in the embodiment.

### <Base station 10>

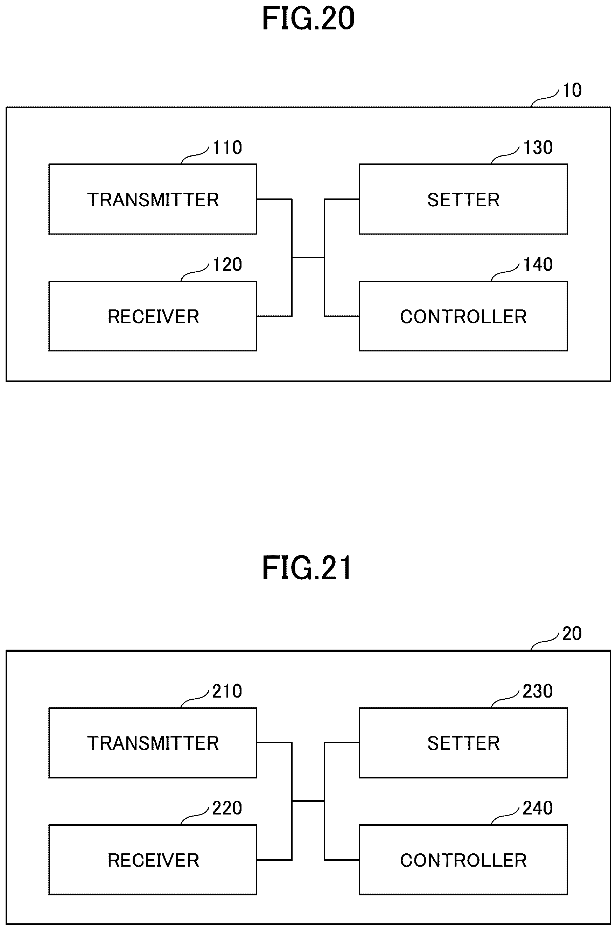

Fig. 20 is a diagram illustrating an example of a functional configuration of the base station 10. As illustrated in Fig. 20, the base station 10 includes a transmitter 110, a receiver 120, a setter 130, and a controller 140. The functional configuration illustrated in Fig. 20 is only one example. Function categories and function units may have any name insofar as the operation according to the embodiment of the invention can be executed.

The transmitter 110 includes a function for generating a signal to be transmitted to the terminal 20 side and transmitting the signal wirelessly. The receiver 120 includes a function for receiving various signals transmitted from the terminal 20 and acquiring, for example, information of a higher layer from the received signals. The transmitter 110 has a function to transmit NR-PSS, NR-SSS, NR-PBCH, DL/UL control signals, DL reference signals, and the like to the terminal 20.

The setter 130 stores the preset setting information and various setting information to be transmitted to the terminal 20 in the storage device and reads the preset setting information from the storage device if necessary. The contents of the setting information are, for example, information pertaining to the setting of D2D communication.

As described in the exemplary embodiment, the controller 140 performs processing pertaining to the setting in which the terminal 20 performs the D2D communication. The controller 140 transmits scheduling of D2D communication and DL communication to the terminal 20 through the transmitter 110. The controller 140 receives information pertaining to the HARQ response of the D2D communication and the DL communication from the terminal 20 via the receiver 120. A function unit related to signal transmission in the controller 140 may be included in the transmitter 110, and a function unit related to signal reception in the controller 140 may be included in the receiver 120.

### <Terminal 20>

Fig. 21 is a diagram illustrating an example of a functional configuration of the terminal 20. As illustrated in Fig. 21, the terminal 20 includes a transmitter 210, a receiver 220, a setter 230, and a controller 240. The functional configuration illustrated in Fig. 21 is only one example. If the operation according to the embodiments of the present invention can be performed, the function category and the name of the function unit may be any one.

The transmitter 210 creates a transmission signal from the transmission data and wirelessly transmits the transmission signal. The receiver 220 receives various signals wirelessly and acquires signals from higher layers from the received signal of the physical layer. The receiver 220 has a function to receive NR-PSS, NR-SSS, NR-PBCH, DL/UL/SL control signals or reference signals transmitted from the base station 10. For example, the transmitter 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to the other terminal 20 as D2D communication, and the receiver 220 receives PSCCH, PSSCH, PSDCH, PSBCH, and the like from the other terminal 20.

The setter 230 stores various setting information received from the base station 10 or the terminal 20 by the receiver 220 in the storage device and reads it from the storage device as necessary. The setter 230 also stores the preset setting information. The contents of the setting information are, for example, information pertaining to the setting of D2D communication.

The controller 240 controls D2D communication to establish an RRC connection with the other terminal 20, as described in the embodiment. The controller 240 performs processing pertaining to the power saving operation. The controller 240 performs processing related to HARQ of D2D communication and DL communication. The controller 240 transmits, to the base station 10, information pertaining to the HARQ response of the D2D communication and the DL communication to the other terminal 20 scheduled by the base station 10. The controller 240 may schedule D2D communication to the other terminal 20. The controller 240 may select resources used for D2D communication autonomously from the resource selection window based on the sensing result, or may perform reevaluation or preemption. The controller 240 performs processing related to power saving when transmitting and receiving D2D communication. The controller 240 performs processing related to terminal-to-terminal coordination in D2D communication. A function unit related to signal transmission in the controller 240 may be included in the transmitter 210, and a function unit related to signal reception in the controller 240 may be included in the receiver 220.

### (Hardware configuration)

Block diagrams (Figs. 20 and 21) used in the description of the above embodiments illustrate blocks of functional units. These functional blocks (components) are implemented by any combination of hardware and/or software. In addition, the implementation method of each function block is not particularly limited. That is, each functional block may be implemented using a single device that is physically or logically combined, or two or more devices that are physically or logically separated may be directly or indirectly connected (e.g., using wired, wireless, etc.) and implemented using these multiple devices. The functional block may be implemented by combining software with the device or devices.

Functions include, but are not limited to, judgment, determination, determination, calculation, calculation, processing, derivation, research, search, verification, reception, transmission, output, access, resolution, selection, selection, establishment, comparison, assumption, expectation, and deeming; broadcasting, notifying, communicating, forwarding, configuring, reconfiguring, allocating, mapping, and assigning. For example, a functional block (component) that functions to transmit is called a transmitting unit or a transmitter. In either case, as described above, the realization method is not particularly limited.

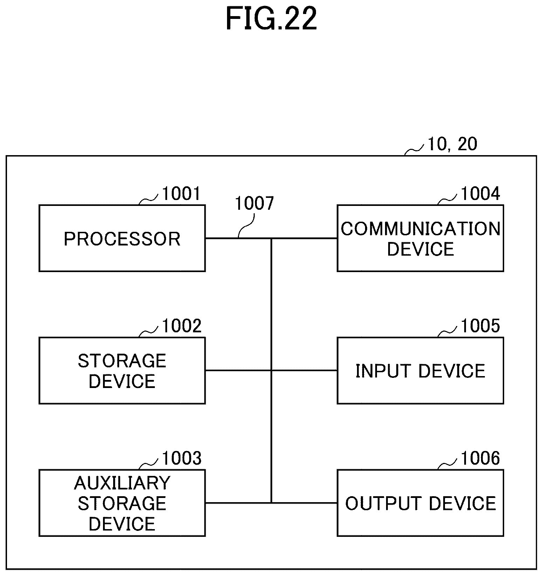

For example, the base station 10, terminal 20, etc., according to an embodiment of the present disclosure may function as a computer for processing the radio communication method of the present disclosure. Fig. 22 is a diagram illustrating an example of the hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be read as circuits, devices, units, etc. The hardware configuration of the base station 10 and terminal 20 may be configured to include one or more of the devices illustrated in the figure or may be configured without some of the devices.

The functions in the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be comprised of a central processing unit (CPU) including an interface with peripheral devices, a controller, an arithmetic unit, a register, and the like. For example, the above-described controller 140, controller 240, and the like may be implemented by the processor 1001.

The processor 1001 reads out a program (program code), software module, data, or the like from at least one of the auxiliary storage device 1003 and the communication device 1004 to the storage device 1002 and performs various processing in accordance with the above. As a program, a program that causes a computer to execute at least a part of the operation described in the above-described embodiment is used. For example, the controller 140 of the base station 10 illustrated in Fig. 20 may be stored in the storage device 1002 and implemented by a control program operating in the processor 1001. For example, the controller 240 of the terminal 20 illustrated in Fig. 21 may be stored in the storage device 1002 and implemented by a control program operating in the processor 1001. Although the foregoing processes have been described and executed by one processor 1001, they may be executed simultaneously or sequentially by two or more processors 1001. The processor 1001 may be implemented by one or more chips. The program may be transmitted from the network via a telecommunication line.

The storage device 1002 is a computer-readable recording medium and may be comprised of at least one of, for example, ROM (Read Only Memory), EPROM (Erasable Programmable ROM), EEPROM (Electrically Erasable Programmable ROM), RAM (Random Access Memory), and the like. The storage device 1002 may be referred to as a register, cache, main memory (main memory), or the like. The storage device 1002 can store programs (program codes), software modules, etc., executable to implement a communication method according to an embodiment of the present disclosure.

The auxiliary storage device 1003 is a computer-readable recording medium and may comprise at least one of an optical disk, such as a CD-ROM (Compact Disc ROM), a hard disk drive, a flexible disk, a magneto-optical disk (e.g., a compact disk, a digital versatile disk, a Blu-ray disk), a smart card, a flash memory (e.g., a card, a stick, a key drive), a floppy disk, a magnetic strip, and the like. The storage medium described above may be, for example, a database, a server, or other suitable medium that includes at least one of a storage device 1002 and an auxiliary storage device 1003.

The communication device 1004 is a hardware (transmitting/receiving device) for performing communication between computers via at least one of a wired network and a wireless network, and is also referred to as a network device, a network controller, a network card, a communication module, or the like. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transceiving unit, the transmission line interface, and the like may be implemented by the communication device 1004. Transmitters and receptacles may be physically or logically isolated implementations of the transmitters and receivers.

The input device 1005 is an input device (e.g., a keyboard, mouse, microphone, switch, button, sensor, etc.) that accepts external input. Output device 1006 is an output device (e.g., a display, speaker, LED lamp, etc.) that implements an external output. The input device 1005 and the output device 1006 may have an integral configuration (for example, a touch panel).

Each device, such as a processor 1001 and a storage device 1002, is connected by a bus 1007 for communicating information. Bus 1007 may be constructed using a single bus or may be constructed using different buses between devices.

The base station 10 and the terminal 20 may also include hardware such as a microprocessor, a digital signal processor (DSP), an ASIC (Application Specific Integrated Circuit), a PLD (Programmable Logic Device), an FPGA (Field Programmable Gate Array), and some or all of the functional blocks may be realized by the hardware. For example, processor 1001 may be implemented using at least one of the hardware.

### (Summary of Embodiments)

As described above, according to the embodiment of the present invention, a terminal is provided. The terminal includes: a transmitter that performs resource selection; and a controller that determines the operation of a DRX (Discontinuous Reception) based on an operation of the resource selection.

With the above configuration, the terminal 20 can determine the ON period or sleep period in the DRX operation based on the resource allocation operation. It is also possible to determine the ON period or sleep period in the DRX operation while suppressing the impact on the resource allocation operation. That is, in direct communication between terminals, the DRX (Discontinuous Reception) operation can be adjusted to fit the operation at the time of autonomous resource selection.

The controller may determine that an ON period of the DRX includes a sensing period in a case where the resource selection requires sensing. With this arrangement, the terminal 20 can determine the ON period or sleep period in the DRX operation based on the resource allocation operation.

The controller may determine the ON period of the DRX based on a reservation periodicity configured in the resource pool. With this arrangement, the terminal 20 can determine the ON period or sleep period in the DRX operation based on the resource allocation operation.

The controller may periodically determine an ON period of the DRX in a case where the resource selection is a random selection. With this arrangement, the terminal 20 can determine the ON period or sleep period in the DRX operation based on the resource allocation operation.

The controller may perform a reception operation even if the DRX is in a sleep period in a case where the sensing operation is performed for reevaluation or preemption check. With this arrangement, the terminal 20 can perform reevaluation or preemption check even in a sleep period in the DRX operation.

Further, according to an embodiment of the present invention, there is provided a communication method performed by a terminal. The communication method includes performing resource selection in a resource pool and determining an operation of DRX (Discontinuous Reception) based on an operation of resource selection.

With the above configuration, the terminal 20 can determine the ON period or sleep period in the DRX operation based on the resource allocation operation. In addition, it is possible to determine the ON period or sleep period in the DRX operation while suppressing the impact on the resource allocation operation. That is, in direct communication between terminals, the DRX (Discontinuous Reception) operation can be adjusted to fit the operation at the time of autonomous resource selection.

### (Supplement to Embodiments)

Thus, although embodiments of the present invention have been described, the disclosed invention is not limited to such embodiments, and various modifications, modifications, alternatives, substitutions, etc. will be understood by those skilled in the art. Specific numerical examples have been used to facilitate understanding of the invention, but unless otherwise indicated, they are merely examples and any appropriate values may be used. Classification of items in the above description is not essential to the present invention, and the items described in two or more items may be used in combination as needed, or the items described in one item may be applied to the items described in another item (unless there is a conflict). The functional or processing unit boundaries in the functional block diagram do not necessarily correspond to the physical part boundaries. The operation of the plurality of functions may be performed physically by one component, or the operation of one function may be performed physically by the plurality of components. As for the processing procedure described in the embodiment, the order of the processing may be changed unless there is no conflict. For convenience of process description, the base station 10 and terminal 20 have been described using a functional block diagram, but such devices may be implemented in hardware, software, or a combination thereof. Software operated by a processor of the base station 10 in accordance with embodiments of the present invention and software operated by a processor of the terminal 20 in accordance with embodiments of the present invention may be stored in random access memory (RAM), flash memory, read only memory (ROM), EPROM, EEPROM, register, hard disk (HDD), removable disk, CD-ROM, database, server, or any other suitable storage medium.

Information may also be communicated in other ways, as well as in the manner/embodiments described in this disclosure. For example, notification of information may be effected by physical layer signaling (e.g., DCI (Downlink Control Information), UCI (Uplink Control Information), upper layer signaling (e.g., RRC (Radio Resource Control) signaling, MAC (Medium Access Control) signaling, MIB (Master Information Block), SIB (System Information Block)), other signals, or a combination thereof. The RRC signaling may also be referred to as an RRC message, for example, RRC Connection Setup (RRC Connection Setup) message, RRC Connection Reconstruction (RRC Connection Reconstruction) message, or the like.

Each aspect/embodiment described in this disclosure is as follows: LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000 UMB (Ultra Mobile Broadband), IEEE 802.11 (Wi-Fi), IEEE 802.16 (WiMAX), IEEE 802.20 (Ultra-WideBand), Bluetooth (Registered Trademark), It may be applied to at least one of the systems utilizing other appropriate systems and the next generation systems extended thereon. Multiple systems may also be applied in combination (e.g., at least one of LTE and LTE-A combined with 5G, etc.).

The processing procedures, sequences, flowcharts, etc. of each aspect/embodiment described herein may be reordered unless there is any conflict. For example, the methods described in the present disclosure are presented using exemplary sequences to present elements of the various steps and are not limited to the particular order presented.

The specific operations described herein as performed by the base station 10 may be performed by its upper node in some cases. In a network of one or more network nodes having a base station 10, it will be apparent that various operations performed for communication with terminal 20 may be performed by at least one of the base station 10 and other network nodes other than base station 10 (e.g., but not limited to MME, S-GW, etc.). Although the above illustrates that there is only one other network node other than the base station 10, the other network nodes may be a combination of multiple other network nodes (e.g., MME and S-GW).

The information or signals described in this disclosure can be output from a higher layer (or lower layer) to a lower layer (or higher layer). It may be input and output through multiple network nodes.

Input and output information may be stored in a specific location (e.g., memory) or managed using management tables. Input and output information may be overwritten, updated, or added. The output information may be deleted. The input information or the like may be transmitted to another device.

The determination in this disclosure may be made by a value (0 or 1) expressed in 1 bit, by a true or false value (Boolean: true or false), or by a numerical comparison (e.g., a comparison with a predetermined value).

Software should be broadly interpreted to mean, whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, and the like.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line (DSL)) and wireless technology (infrared, microwave, etc.), at least one of these wireline technology and wireless technology is included within the definition of a transmission medium.

The information, signals and the like described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in the present disclosure and those necessary for understanding the present disclosure may be replaced by terms having the same or similar meanings. For example, at least one of the channels and the symbols may be a signal (signaling). The signal may also be a message. The component carrier (CC) may also be referred to as a carrier frequency, cell, frequency carrier, or the like.

As used in this disclosure, the terms "system" and "network" are used interchangeably.

The information, parameters, and the like described in the present disclosure may also be expressed using absolute values, relative values from predetermined values, or they may be expressed using corresponding separate information. For example, the wireless resources may be those indicated by an index.

The name used for the parameters described above is not restrictive in any respect. In addition, the mathematical equations using these parameters may differ from those explicitly disclosed in this disclosure. Since the various channels (e.g., PUCCH, PDCCH, etc.) and information elements can be identified by any suitable name, the various names assigned to these various channels and information elements are not in any way limiting.

In this disclosure, terms such as "base station (BS)", "wireless base station", "base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. The base station may also be referred to as a macrocell, a small cell, a femtocell, a picocell, or the like.

The base station can accommodate one or more (e.g., three) cells. If the base station accommodates a plurality of cells, the entire coverage area of the base station can be divided into a plurality of smaller areas, each of which can also provide communications services via a base station subsystem (e.g., a small indoor base station (RRH) or Remote Radio Head). The term "cell" or "sector" refers to part or all of the coverage area of at least one of the base station and base station subsystem that provides communications services at the coverage.

In this disclosure, terms such as "mobile station (MS)", "user terminal", "user equipment (UE)", "terminal", and the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base stations and the mobile station may be referred to as a transmitter, receiver, communication device, or the like. At least one of the base station and the mobile station may be a device mounted on the mobile body, a mobile body, or the like. The mobile may be a vehicle (e.g., a car, an airplane, etc.), an unmanned mobile (e.g., a drone, an automated vehicle, etc.), or a robot (manned or unmanned). At least one of the base station and the mobile station includes a device that does not necessarily move during communication operations. For example, at least one of the base station and the mobile station may be an IoT (Internet of Things) device such as a sensor.

In addition, the base station in the present disclosure may be read by the user terminal. For example, various aspects/embodiments of the present disclosure may be applied for a configuration in which communication between base stations and user terminals is replaced by communication between multiple terminals 20 (e.g., may be referred to as D2D (Device-to-Device), V2X (Vehicle-to-Everything), etc.). In this case, the terminal 20 may have the functions provided by the base station 10 described above. The phrases "upstream" and "downstream" may also be replaced by the phrases corresponding to terminal-to-terminal communication (e.g., "side"). For example, an upstream channel, an downstream channel, or the like may be read by a side channel.

Similarly, the user terminal in the present disclosure may be read by the base station. In this case, the base station may have the functions provided by the user terminal described above.

As used in this disclosure, the terms "determining" and "determining" may encompass a wide variety of operations. "Judgment" includes, for example, judging, calculating, computing, processing, deriving, investigating, looking up, search, inquiry (e.g., searching in tables, databases, or other data structures), ascertaining, and so forth. "Judgment" and "decision" may also include receiving (e.g., receiving information), transmitting (e.g., sending information), input, output, and accessing (e.g., accessing data in memory) as "judged" and "determined", and the like. "Judgment" and "decision" may also include "judgment" and "decision" regarding matters such as resolving, selecting, choosing, establishing, comparing, etc. That is, the "judgment" and the "decision" may include deeming some action to be "judgment" and "determination". "Decision" may be read as "assuming", "expecting", or "considering", etc.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "solely" unless otherwise specified. In other words, the expression "based on" means both "solely" and "at least based on".

Any reference to an element using a designation such as "first" or "second" as used in the present disclosure does not generally limit the amount or order of those elements. These designations can be used in the present disclosure as a convenient way to distinguish between two or more elements. Thus, references to the first and second elements do not imply that only two elements may be employed or that the first element must in some way precede the second element.

"Means" in the configuration of each of the above devices may be replaced by "parts", "circuits", "devices", etc.

When the terms "include", "including" and variations thereof are used in the present disclosure, these terms are intended to be comprehensive as well as the term "comprising". Moreover, the term "or" as used in this disclosure is not intended to be an exclusive-OR.

The wireless frame may consist of one or more frames in the time domain. Each frame or frames in the time domain may be referred to as subframes. The subframe may further comprise one or more slots in the time domain. The subframe may be a fixed length of time (e.g., 1 ms) independent of the numerology.

The numerology may be a communication parameter that is applied to at least one of transmission and reception of a signal or channel. The numerology may indicate at least one of, for example, SubCarrier Spacing (SCS), bandwidth, symbol length, cyclic prefix length, transmit time interval (TTI), number of symbols per TTI, wireless frame configuration, specific filtering processing performed by the transceiver in the frequency domain, and specific windowing processing performed by the transceiver in the time domain.

The slot may consist of one or more symbols in the time domain, such as OFDM (Orthogonal Frequency Division Multiplexing) symbols, SC-FDMA (Single Carrier Frequency Division Multiple Access symbols, and the like. The slot may be in time units based on a numerology.

The slots may include a plurality of minislots. Each minislot may be comprised of one or more symbols in the time domain. The minislot may also be referred to as a subslot. The minislots may consist of fewer symbols than the slots. A PDSCH (or PUSCH) transmitted in time units greater than a minislot may be called a PDSCH (or PUSCH) mapping type A. PDSCH (or PUSCH) transmitted using minislots may be referred to as PDSCH (or PUSCH) mapping type B.

Radio frames, subframes, slots, minislots and symbols all represent time units for transmitting signals. Radio frames, subframes, slots, minislots and symbols, respectively, may be designated separately.

For example, one subframe may be referred to as a Transmission Time Interval (TTI), multiple consecutive subframes may be referred to as a TTI, and one slot or one minislot may be referred to as a TTI. That is, at least one of the subframes and the TTI may be a subframe (1 ms) in an existing LTE, a period shorter than 1 ms (e.g., 1-13 symbols), or a period longer than 1 ms. The unit representing the TTI may be referred to as a slot, a minislot, or the like, rather than a subframe.

The TTI refers, for example, to the minimum time unit for scheduling in wireless communication. For example, in an LTE system, a base station schedules each terminal 20 to allocate wireless resources (such as frequency bandwidth, transmit power, etc. that can be used in each terminal 20) in TTI units. The definition of TTI is not limited to this.

The TTI may be a transmission time unit, such as a channel-encoded data packet (transport block), code block, codeword, or the like, or may be a processing unit, such as a scheduling or link adaptation. When a TTI is provided, the time interval (e.g., the number of symbols) during which the transport block, code block, codeword, or the like is actually mapped may be shorter than the TTI.

If one slot or one minislot is referred to as a TTI, one or more TTIs (i.e., one or more slots or one or more minislots) may be the minimum time unit for scheduling. The number of slots (minislots) constituting the minimum time unit of the scheduling may also be controlled.

A TTI having a time length of 1 ms may be referred to as a TTI (usually a TTI in LTE Rel. 8-12), a normal TTI, a long TTI, a normal subframe, a normal subframe, a long subframe, a slot, and the like. A TTI that is typically shorter than a TTI may be referred to as a shortened TTI, a short TTI, a partial TTI (partial or fractional TTI), a shortened subframe, a short subframe, a minislot, a subslot, a slot, or the like.

The long TTI (e.g., usually TTI, subframe, etc.) may be interpreted as a TTI having a time length exceeding 1 ms, and the short TTI (e.g., shortened TTI, etc.) may be interpreted as a TTI having a TTI length less than the TTI length of the long TTI and a TTI length greater than 1 ms.

The resource block (RB) is a time domain and frequency domain resource allocation unit and may include one or more consecutive subcarriers in the frequency domain. The number of subcarriers included in the RB may be the same regardless of the numerology, for example 12. The number of subcarriers included in the RB may be determined on the basis of numerology.

The time domain of the RB may also include one or more symbols, which may be 1 slot, 1 minislot, 1 subframe, or 1 TTI in length. One TTI, one subframe, etc., may each consist of one or more resource blocks.

Note that one or more RBs may be referred to as physical resource blocks (PRBs), sub-carrier groups (SCGs), resource element groups (REGs), PRB pairs, RB pairs, and the like.

The resource block may also consist of one or more resource elements (RE). For example, 1 RE may be a wireless resource area of one sub-carrier and one symbol.

The bandwidth portion (which may also be referred to as a partial bandwidth, etc.) may represent a subset of consecutive common RB (common resource blocks) for a given numerology in a carrier. Here, the common RB may be identified by an index of RB relative to the common reference point of the carrier. A PRB is defined in a BWP and may be numbered within that BWP.

BWP may include BWP for UL (UL BWP) and BWP for DL (DL BWP). One or more BWPs may be configured in one carrier for the terminal 20.

At least one of the configured BWPs may be active, and the terminal 20 may not assume to transmit or receive predetermined signals/channels outside the active BWP. The terms "cell" and "carrier" in this disclosure may be replaced by "BWP".".

Structures such as radio frames, subframes, slots, minislots, and symbols described above are exemplary only. For example, the number of subframes included in a wireless frame, the number of slots per subframe or wireless frame, the number of minislots included in the slot, the number of symbols and RBs included in the slot or minislot, the number of subcarriers included in the RB, the number of symbols in the TTI, the symbol length, the length of the cyclic prefix (CP) length, and the like may vary.

In the present disclosure, where an article is added by translation, for example a, an, and the English language, the disclosure may include that the noun following these articles is plural.

In this disclosure, the term "A and B are different" may mean "A and B are different from each other". Incidentally, the term may mean "A and B are different from C". Terms such as "separated" or "combined" may be interpreted as well as "different".

The aspects/embodiments described in the present disclosure may be used alone, used in combination, or switched with implementation. Notice of a given information (e.g. "X" notice) may also be given by implication (e.g. "no notice of the given information"), not explicitly.

While the present disclosure has been described in detail above, those skilled in the art will appreciate that the present disclosure is not limited to the embodiments described in the present disclosure. The disclosure may be implemented as modifications and variations without departing from the spirit and scope of the disclosure as defined by the claims. Accordingly, the description of the present disclosure is for illustrative purposes only and is not intended to have any restrictive meaning with respect to the present disclosure.

The present international patent application is based on and claims priority to Japanese patent application No. 2021-012458 filed on January 28, 2021, the entire contents of which are hereby incorporated herein by reference.

### [DESCRIPTION OF THE REFERENCE NUMERALS]

- 10: base station
- 110: transmitter
- 120: receiver
- 130: setter
- 140: controller
- 20: terminal
- 210: transmitter
- 220: receiver
- 230: setter
- 240: controller
- 1001: processor
- 1002: storage device
- 1003: auxiliary storage device
- 1004: communication device
- 1005: input device
- 1006: output device

## Claims

1. A terminal comprising:
a transmitter configured to perform resource selection in a resource pool; and
a controller configured to determine an operation of DRX (Discontinuous Reception) based on an operation of the resource selection.

2. The terminal according to claim 1, wherein
the controller determines that an ON period of the DRX includes a sensing period in a case where the resource selection requires sensing.

3. The terminal according to claim 2, wherein
the controller determines the ON period of the DRX based on a reservation periodicity configured in the resource pool.

4. The terminal according to claim 1, wherein
the controller periodically determines an ON period of the DRX in a case where the resource selection is a random selection.

5. The terminal according to claim 4, wherein
the controller performs a reception operation even if the DRX is in a sleep period in a case where a sensing operation is performed for reevaluation or a preemption check.

6. A communication method performed by a terminal, the communication method comprising:
performing resource selection in a resource pool; and
determining an operation of DRX (Discontinuous Reception) based on an operation of the resource selection.
